# EUROPÄISCHE PATENTANMELDUNG

(11) **EP 1 527 844 A1**
(43) Veröffentlichungstag der Anmeldung: **04.05.2005**
(21) Anmeldenummer: 04024284.4
(22) Anmeldetag: 12.10.2004
(51) Int. Cl.: B23K 33/00, B23K 26/24, B23K 26/32, B32B 15/08, B32B 15/01, E04C 2/26

(54) **Verbindung bestehend aus Verbundwerkstoffen mit einer teilweise abgeschmolzenen Nahtschweissen und Verfahren zur Ausbildung einer solchen Verbindung**

(30) Priorität: 30.10.2003 DE 10350953
(71) Anmelder: Alcan Technology & Management AG, 8212 Neuhausen am Rheinfall (CH)
(72) Erfinder: Wieschermann, Jochen, Dipl.-Ing., 88682 Salem (DE); Deflorin, Duri, Masch.Ing., 8810 Horgen (CH); Kempa, Stefan, Dipl.-Ing., 8200 Schaffhausen (CH); Meier, Johannes, Masch.Ing. (FH), 8254 Basadingen (CH)
(74) Vertreter: Nestler, Jan Hendrik

(57) **Zusammenfassung**

Die Erfindung betrifft eine Verbindung, bestehend aus mindestens zweier Metallelemente (10,12), von denen zumindest eines der beiden Elemente eine Deckschicht (27,28) eines Verbundwerkstoffs (12) mit einem wärmeempfindlichen Kern (21) darstellt, wird dadurch hergestellt, dass bei einem Schweißvorgang bzw. einem Lötvorgang das Material derart aufgeschmolzen wird, dass zwischen dem wärmeempfindlichen Kern (21) und dem aufgeschmolzenen Nahtbereich (30) eine nicht aufgeschmolzene Schicht (32) verbleibt. Bei dieser nicht aufgeschmolzenen Schicht kann es sich um einen Teilbereich (32) der Metallelemente (27,28) selbst handeln und/oder um zusätzliche Elemente. Die Erfindung betrifft auch ein Verfahren zur Ausbildung einer solchen Verbindung.

## Beschreibung

Die Erfindung betrifft eine Verbindung wenigstens zweier Elemente aus metallischem Material, insbesondere aus Aluminium oder einer Aluminiumlegierung, wobei zumindest ein erstes Element eine Deckschicht als Teil eines Verbundwerkstoffs darstellt, welcher einen insbesondere wärmeempfindlichen Kern und wenigstens eine äußere Deckschicht aufweist. Weiterhin betrifft die Erfindung ein Verfahren zur Ausbildung einer solchen Verbindung. Darüber hinaus betrifft die Erfindung die Verwendung einer vorgeschlagenen Verbindung bzw. eines vorgeschlagenen Verfahrens.

Verbundwerkstoffe finden aufgrund Ihrer besonderen spezifischen Vorteile zunehmend Verwendung in unterschiedlichsten Gebieten der Technik, so beispielsweise in der Bauwirtschaft, dem Fahrzeugbau bis hin zum Flugzeugbau und der Raumfahrt.

Verbundwerkstoffe weisen in der Regel günstige Materialeigenschaften wie geringes Gewicht, hohe Korrosionsfestigkeit und fast uneingeschränkte Formgebungsmöglichkeiten auf. So werden beispielsweise 3 bis 200 mm dicke Sandwichplatten, bestehend aus zwei Deckschichten aus korrosionsfesten Aluminiumlegierungen und einem Kunststoffkern, in der Bauwirtschaft verwendet. Solche Elemente werden beispielsweise im Hochbau als Fassadenverkleidungen eingesetzt. Auch Verbundwerkstoffe mit einem wärmedämmenden Kern aus Kunststoff, Mineralwatte, Schaumaluminium oder Schaumglas dienen als tragende Fassadenelemente, Trennwände oder für Türfüllungen und Bedachungen. Prinzipiell sind als Kernelemente auch Aluminiumwaren, Hölzer wie beispielsweise Balsaholz, Schaumaluminium oder Kunststoff denkbar. Werden diese zwischen Deckschichten aus hochfestem Aluminiumlegierungen angeordnet, so ergeben sich leichte und doch sehr steife Bauelemente.

Ganz allgemein wird mit dem Begriff Verbundwerkstoff im vorliegenden Text ein mechanisch stabiler und tragender Werkstoff, enthaltend einen Kern und mindestens eine äußere Deckschicht, bezeichnet.

Die Herstellung von Verbundwerkstoffen geschieht meist in Form von Platten. Sollen die Platten zur Ausbildung komplexerer Strukturen verwendet werden, so stellt sich das Erfordernis, Verbindungen zwischen zwei Verbundwerkstoffen beziehungsweise einem Verbundwerkstoff und einem Metallelement auszubilden. Zur Verbindung von zwei Verbundelementen sind mechanische Verbindungselemente wie beispielsweise Schrauben und Nieten bekannt. Nachteilig bei diesen Verbindungen ist jedoch der mechanische Aufwand, sowie der Umstand, dass die genannten Verbindungsmittel in der Regel nach außen überstehen. Darüber hinaus wirken die genannten Verbindungen in der Regel nur punktweise, nicht jedoch über eine Strecke beziehungsweise Kante hinweg. Dadurch wiederum ist es oft erforderlich, die Deckschichten stärker auszuführen, als dies von der Stabilität der Verbundwerkstoffe her nötig wäre.

Bekannt sind auch Klebeverbindungen zwischen zwei Verbundwerkstoffen beziehungsweise einem Verbundwerkstoff und einem sonstigen Konstruktionselement, wie beispielsweise einer Metallplatte. Problematisch ist bei solchen Klebeverbindungen die häufig nur beschränkte Festigkeit, beziehungsweise das Erfordernis, eine relativ große Klebefläche vorzusehen, um eine bestimmte Festigkeit zu erzielen. Auch dies schränkt die Konstruktionsmöglichkeiten ein.

Vorteilhafte Schweiß- beziehungsweise Hartlöttechniken wiederum erweisen sich für das Zusammenfügen von Verbundwerkstoffen oftmals als problematisch. Da bei Schweiß- und Lötvorgängen unvermeidbar eine nicht unerhebliche Prozesstemperatur zum Aufschmelzen der zu verbindenden Materialien einher geht, kommen solche Verbindungstechniken nur für thermisch stabile Materialien in Frage. Gerade bei Verbundmaterialien ist dies jedoch häufig nicht gegeben. Werden beispielsweise als Kernmaterialien wärmeempfindliche oder wärmezersetzbare Materialien wie Kunststoffe verwendet, so bewirkt ein Schweißvorgang eines Deckelements des Verbundwerkstoffs eine Beschädigung, Zerstörung beziehungsweise Zersetzung des Kernmaterials. Durch eine Zersetzung beziehungsweise ein Verbrennen des Kernmaterials können wiederum in unkontrollierbarer Weise Gase oder Dämpfe entweichen, die die Bildung einer gleichmäßigen und porenfreien Schweißnaht verhindern. Dadurch wird eine mechanisch stabile und dauerhafte Verbindung oft unmöglich. Zudem bewirkt die Zersetzung des Kernmaterials im Bereich der Schweißnaht eine entsprechende Schwächung der mechanischen Eigenschaften des Kerns und damit der gesamten Verbindung.

Das genannte Problem stellt sich jedoch nicht nur in solchen Fällen, in denen das Kernmaterial temperaturempfindlich bzw. temperaturzersetzbar ist, sondern auch in Fällen, bei denen beispielsweise die Verbindung zwischen Kernmaterial und Decklagen des Verbundwerkstoffs temperaturempfindlich bzw. temperaturzerstörbar sind. In einem solchen Fall kann es zu einer Delamination der Decklagen vom Kern kommen, so dass auch hier eine mechanisch stabile und dauerhafte Verbindung erschwert wird.

Um die geschilderten Probleme zu umgehen, wurde bereits vorgeschlagen, im Bereich der Schweiß- beziehungsweise Lötnähte Ausnehmungen im Kernmaterial vorzusehen. Dadurch wurde eine direkte Verbindung zwischen aufgeschmolzenem Material und thermisch empfindlichem Kernmaterial verhindert. Bei dieser vorgeschlagenen Ausbildung kommt es zwar zu keiner beziehungsweise zu einer verringerten Freisetzung von Gasen durch das sich aufgrund der Temperaturerhöhung zersetzende Kernmaterial, jedoch ergibt sich bei der vorgeschlagenen Bauform eine freistehende Deckschicht, welche nicht mehr vom Kernmaterial des Verbundwerkstoffes gestützt wird.

Von der mechanischen Situation her ähnelt dies einer Delamination der Deckschicht vom Kernmaterial, was entsprechend problematisch in Bezug auf die mechanische Stabilität der Verbindung ist.

Ferner wurde im Patent Abstract of Japan JP 62-238072-A vorgeschlagen, bei der Verbindung zweier Verbundmaterialien eine Einlage zu verwenden, die parallel zu den Schnittkanten der miteinander zu verbindenden Verbundmaterialien verläuft und auf beiden Seiten der Deckschichten der Verbundmaterialien übersteht. Die Zwischenlage ist aus Metall und kann aufgeschmolzen werden. Der Verbindungsvorgang erfolgt als Lötverbindung durch ein teilweises Aufschmelzen der Zwischenlage sowie gegebenenfalls ein teilweises Aufschmelzen der Deckschichten der Verbundmaterialien. Es kommt jedoch zu einem direkten Kontakt zwischen aufgeschmolzenem Material und Kernmaterial des Verbundwerkstoffes. Dies zieht die oben beschriebenen Probleme mit sich.

In Kenntnis dieser Standes der Technik hat es sich der Erfinder zur Aufgabe gemacht, eine Verbindung zur Verbindung zweier Elemente aus metallischem Material, insbesondere aus Aluminium oder einer Aluminiumlegierung, wobei zumindest ein erstes Element eine Deckschicht als Teil eines Verbundwerkstoffes darstellt, welcher einen insbesondere wärmeempfindlichen Kern und wenigstens eine äußere Deckschicht aufweist, vorzuschlagen, bei dem die genannten Probleme verhindert oder zumindest verringert werden sollen. Insbesondere soll das Problem der thermischen Zersetzung des Kernmaterials, der Delamination der Deckschicht von der Kernschicht beim Verbundmaterial sowie eine Schwächung der mechanischen Festigkeit im Bereich der Verbindung vermieden werden. Dennoch soll die Verbindung einfach und wirtschaftlich durchführbar sein.

Weiterhin ist es die Aufgabe der Erfindung, ein geeignetes Verfahren zur Erzeugung einer solchen Verbindung vorzuschlagen.

Darüber hinaus ist es die Aufgabe der Erfindung, eine vorteilhafte Verwendung einer vorgeschlagenen Verbindung bzw. eines vorgeschlagenen Verfahrens anzuregen.

Zur Lösung dieser Aufgabe führt die Lehre der unabhängigen Ansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Zur Verbindung wenigstens zweier Elemente aus metallischem Material, insbesondere aus Aluminium oder einer Aluminiumlegierung, wobei zumindest ein erstes Element eine Deckschicht als Teil eines Verbundwerkstoffs darstellt, welcher einen insbesondere wärmeempfindlichen Kern und wenigstens eine äußere Deckschicht aufweist, wird vorgeschlagen, dass die Verbindung zumindest abschnittsweise als schmelzbadgesicherte Schmelzschweißnaht und/oder schmelzbadgesicherte Lötnaht, insbesondere Hartlötnaht, ausgeführt ist, derart, dass während des Verbindungsvorgangs zumindest eine nicht aufgeschmolzene Schicht zwischen aufgeschmolzenem Bereich und Kern verblieben ist. Dadurch kommt es zu keiner direkten Verbindung zwischen der Schmelze und den wärmeempfindlichen Materialien, wie dem Kern beziehungsweise einer Laminationsschicht zwischen Kern und Deckschicht. Eine solche nicht aufgeschmolzene Schicht weist nämlich in der Regel ein geringeres Wärmeübertragungsvermögen als eine aufgeschmolzene Schicht auf. Insbesondere kann eine Materiallage in festem Aggregatszustand -- im Gegensatz zu einer Flüssigkeit -- keine Wärme durch Konvektion übertragen. Dadurch kann ein wirksamer Schutz der temperaturempfindlichen Bereiche vor einer übermäßigen Wärmebeaufschlagung erzielt werden. Unter wärmeempfindlich ist hier jegliche Veränderung im Material, welche durch Wärme bedingt ist, zu verstehen. Insbesondere kommt hier eine Zersetzung, Verformung sowie eine Zerstörung des wärmeempfindlichen Materials in Betracht. Es kann sich dabei um einen wärmezersetzbaren Kern handeln, aber auch um sonstige wärmekritische Materialien wie beispielsweise Klebstoffe (z. B. zur Verbindung von Kern und Deckplatten), Beschichtungen, Aufdrucke usw..

Vorzugsweise kommt es während des Verbindungsvorganges zu keinerlei Verbindung zwischen aufgeschmolzenem Material und temperaturempfindlichen Bereichen. Jedoch führt ein hinreichend kurzfristiger oder ein nur abschnittsweiser oder punktueller Kontakt nicht notwendigerweise zu einer bedeutenden Verschlechterung des Verbindungsergebnisses. Die Schweißnähte beziehungsweise die Lötnähte können in beliebiger Weise ununterbrochen, abschnittsweise oder punktartig ausgeführt werden. Die jeweilige Ausführungsweise richtet sich dabei im Wesentlichen nach der gewünschten mechanischen Festigkeit und dem tolerierbaren Fertigungsaufwand. Aber auch Überlegungen wie eine besondere Dichtigkeit der Verbindung (wie insbesondere eine Wasserdichtigkeit oder eine Gasdichtigkeit) können eine Rolle spielen.

Als geeignetes Material, aus dem die Elemente (Deckschicht, daran zu verbindendes Element) gefertigt sind, bietet sich insbesondere Aluminium oder eine Aluminiumlegierung an. Rein prinzipiell sind jedoch alle Materialien geeignet, die über einen relativ niedrigen Schmelzpunkt verfügen und/oder eine relativ geringe Temperaturleitfähigkeit aufweisen.

Eine vorteilhafte Verbindung kann sich ergeben, wenn das zweite Element ein Profil oder Blech aus einem metallischen Material, insbesondere aus Aluminium oder Aluminiumlegierung, darstellt. Dies betrifft beispielsweise einen Fall, bei dem ein Verbundwerkstoff (beispielsweise zu Isolationszwecken) auf einem tragenden Bauteil befestigt werden soll. Möglich ist es auch, dass eine Verbindung, zu einem profilartigen Element, wie beispielsweise einem T-Träger, einem U-förmigen oder einem V-förmigen Profil, einem Hohlprofil usw. vorgesehen wird.

Eine weitere vorteilhafte Weiterbildung ergibt sich, wenn das zweite Element den Kern des Verbundwerkstoffs zumindest teilweise überdeckt. Durch diese Weiterbildung kann insbesondere ein Schutz des Kerns von äußeren Einflüssen (gleich ob thermischer, chemischer oder mechanischer Art) realisiert werden. Insbesondere ist eine Kombination mit der vorangehenden Weiterbildung sinnvoll.

Möglich ist es auch, die vorgeschlagene Verbindung anzuwenden, wenn das zweite Element eine Deckschicht als Teil eines Verbundwerkstoffs darstellt, welcher einen insbesondere wärmezersetzbaren Kern und wenigstens eine äußere Deckschicht aufweist. Die vorgeschlagene Verbindung kann dann zur Verbindung zweier Verbundelemente dienen. Selbstverständlich umfasst diese Weiterbildung auch die Möglichkeit, beide Deckschichten (sofern die Verbundwerkstoffe jeweils zwei Deckschichten aufweisen) miteinander zu verbinden. Auch kann eine zusätzliche Klebeverbindung im Bereich der jeweiligen Kerne vorgesehen werden.

Ebenso kann es sich als vorteilhaft erweisen, wenn die beiden Elemente je einen Teil ein und derselben Deckschicht eines Verbundwerkstoffs darstellen. Dadurch kann beispielsweise eine Kante in einem Verbundwerkstoff ausgebildet werden. Dies kann beispielsweise dadurch erfolgen, dass an einer Seite eine beispielsweise dreieckförmige Nut ausgefräst wird und die Verbundmaterialplatte entlang dieser Nut zusammengeklappt wird. Durch das Verbinden der innenliegenden Teile der Deckschicht kann erreicht werden, dass das sich ergebende Bauteil eine höhere Formstabilität aufweist und der Kernwerkstoff beispielsweise vor Flammen, Wasser, Chemikalien etc. geschützt ist. Dies kann eine höhere Sicherheitsklasse ermöglichen (beispielsweise bei Brandtests) oder aber auch Verbundmaterialien für neuartige Einsatzzwecke verwendbar machen.

Eine weitere vorteilhafte Ausführung kann sich ergeben, wenn das zweite Element eine zweite Deckschicht ein und desselben Verbundwerkstoffs darstellt. Mit der vorgeschlagenen Weiterbildung kann sich ein besonders vorteilhafter Endabschluss einer Verbundplatte ergeben, bei dem das Kernmaterial nicht nach außen hin freiliegt. Die sich ergebenden Vorteile ähneln den der vorherigen Weiterbildungsmöglichkeit.

Von Vorteil ist es, wenn zwischen erstem Element und zweitem Element zumindest bereichsweise ein Überlappungsbereich ausgebildet ist. Dadurch ist ein besonders dichter Verschluss des Kantenbereichs der Verbundplatte möglich. Weiterhin können aufgrund des Überlappungsbereichs eine Mehrzahl von Schweißnähten vorgesehen werden, so dass die Haltbarkeit des Kantenabschlusses einer Verbundplatte besonders groß sein kann. Schließlich ist die Ausbildung von Schweißnähten in einem derartigen Überlappungsbereich in aller Regel einfacher durchführbar. Auch können gegebenenfalls geringere Anforderungen an die Zuschnittsgenauigkeit bzw. die vorherige Präparation der entsprechenden Teile gestellt werden.

Selbstverständlich ist es auch möglich, dass mehrere der genannten Verbindungsarten, insbesondere an unterschiedlichen Stellen eines Verbundmaterials, realisiert werden.

Die vorgeschlagene schmelzbadgesicherte Verbindung kann dadurch realisiert werden, dass die Elemente selbst zumindest bereichsweise als Schmelzbadsicherung wirken. So kann beispielsweise durch eine entsprechende Formgebung der Randbereiche der miteinander zu verbindenden Elemente erreicht werden, dass diese als Schmelzbadsicherung wirken. Dies kann beispielsweise durch eine teilweise V-förmige oder U-förmige Profilierung des Verbindungsbereichs realisiert werden. Die dadurch entstehende Ausnehmung kann dann beispielsweise durch ein Lotmaterial verfüllt werden. Auch ist es denkbar, dass die Elemente geschichtet ausgebildet sind, derart, dass diese beispielsweise auch in ihrer dem Kern zugewandten Hälfte durch entsprechende Zusätze einen höheren Schmelzpunkt aufweisen, als in der vom Kern entfernten Lage. Ebenso ist es denkbar, dass der Verbindungsvorgang derart gesteuert wird, dass die Deckschichten nur teilweise aufgeschmolzen werden. Dies kann beispielsweise durch eine hohe Schweißgeschwindigkeit mit einem relativ geringen Wärmeeintrag erzielt werden. Als besonders vorteilhaft erweisen sich in diesem Zusammenhang Materialien, die über eine relativ niedrige Wärmeleitfähigkeit und/oder eine hohe Schmelzenthalpie aufweisen.

Als besonders vorteilhaft kann es sich jedoch auch erweisen, wenn zumindest bereichsweise zumindest eine zusätzliche Schmelzbadsicherung vorgesehen ist. Dies kann einen besonders effektiven Schutz des Kernmaterials beziehungsweise des Verbindungsbereichs vor einer übermäßigen thermischen Beaufschlagung bewirken. Das Vorsehen einer Mehrzahl von zusätzlichen Schmelzbadsicherungen kann einen nochmals gesteigerten Schutz des Kernmaterials beziehungsweise des Verbindungsbereichs vor einer übermäßigen Erhitzung bewirken. Auch ist es denkbar, dass die Schmelzbadsicherung mehrteilig vorgesehen ist, beziehungsweise dass voneinander unabhängige Schmelzbadsicherungen in den Stirnflächen von miteinander zu verbindenen Verbundwerkstoffen vorgesehen sind, die insbesondere auch gleichartig (beziehungsweise spiegelbildlich) ausgebildet sein können. Natürlich ist auch eine Kombination mit einer Schmelzbadsicherung durch die Elemente selbst möglich.

Besonders vorteilhaft kann zumindest eine zusätzliche Schmelzbadsicherung zumindest bereichsweise aus thermisch isolierendem Material gebildet sein.

Möglich ist es, zumindest eine zusätzliche Schmelzbadsicherung zumindest bereichsweise als Hinterlageeinrichtung auszubilden. Diese kann dann beispielsweise zwischen Kernmaterial und dem/den zu verbindendem/n Element(en) vorgesehen werden. Gegebenenfalls kann die Schmelzbadsicherung auch so ausgeführt sein, dass diese bei einer Temperaturerhöhung weich wird beziehungsweise geeignet beschichtet ist, so dass eine zusätzliche Klebeverbindung zwischen zu verbindendem/n Element(en) und Kern entsteht.

Möglich ist es jedoch auch, zumindest eine zusätzliche Schmelzbadsicherung zumindest bereichsweise als Auflageeinrichtung auszubilden. Dies kann beispielsweise in Form einer Matrize erfolgen, die auf die Deckelemente aufgelegt wird und Nuten aufweist, die mit einem Lotmaterial verfüllt werden können.

Vorzugsweise steht zumindest eine zusätzliche Schmelzbadsicherung zumindest bereichsweise mit wenigstens zwei Verbindungen im Kontakt. Dadurch kann eine zusätzliche mechanische Stabilität realisiert werden; insbesondere kann eine Delamination der Deckelemente vom Kern vermieden werden. Die zusätzliche Schmelzbadsicherung kann beispielsweise als zwischenliegende Stütze, oder aber auch als außenliegende, umgreifende Klammer ausgebildet sein.

Vorzugsweise ist zumindest eine zusätzliche Schmelzbadsicherung derart ausgebildet, dass sie als Positionierungshilfsmittel wirkt. Dadurch kann vor Herstellung beispielsweise einer Schweißverbindung eine mechanische Verbindung realisiert werden, die die Ausbildung der Schweißnaht erleichtert. Dies kann beispielsweise durch das Vorsehen von zwei Stegen an der zusätzlichen Schmelzbadsicherung realisiert werden, wobei die Stege in entsprechend ausgebildete Nuten im Kern der miteinander zu verbindenden Verbundmaterialien eingreifen. Derartige Nuten können heutzutage mit computerunterstützen Fräsverfahren relativ einfach mit einem exakt definierten Abstand zu den Deckflächen in das Kernmaterial eingefräst werden.

Vorzugsweise ist zumindest eine zusätzliche Schmelzbadsicherung derart ausgebildet, dass sie als zusätzliches Verbindungsmittel wirkt. Dies kann analog zur Ausbildung als Positionierungshilfsmittel realisiert werden. Es kann sich so eine zusätzliche mechanische Stabilität der fertiggestellten Verbindung ergeben.

Besonders vorteilhaft ist es, wenn die zusätzliche Schmelzbadsicherung als selbstschneidende und/oder selbstjustierende Einrichtung ausgebildet ist. Dies kann die Handhabung erleichtern beziehungsweise die Anzahl der erforderlichen Fertigungsschritte zur Ausbildung der Verbindung verringern.

Von Vorteil ist, wenn zur Ausbildung der Verbindung ein Laserschweißverfahren verwendet wird. Insbesondere können dabei CO₂-Laser, Nd-YAG-Laser, Farbstofflaser, Rubinlaser oder Diodenlaser Anwendung finden. Ebenso ist es beliebig, ob die Verbindung durch ein Wärmeleitungsschweißen oder ein Tiefschweißen ausgebildet wird. Die Art der Strahlungsquelle, und damit die Art des Laserstrahls kann dabei in Abhängigkeit der zu schweißenden Materialien verwendet werden. Insbesondere bei Aluminium bzw. Aluminiumlegierungen bietet sich aufgrund des Reflektionsverhaltens des Aluminiums ein kurzwelliger Laser an, wie beispielsweise ein Nd-YAG-Laser mit einer Wellenlänge von λ = 1,06 Mikrometer. Darüber hinaus hat eine Lichtwellenlänge in diesem Bereich den Vorteil, dass das Licht durch Glasfasern zum Werkstück geführt werden kann, so dass flexiblere Schweißvorgänge möglich sind. Beim Einsatz von durchstimmbaren Lasern (z. B. durchstimmbaren Farbstofflasern) kann die Laserlichtquelle besonders gut an die jeweilige Schweißaufgabe angepasst werden. Dies kann ggf. auch während des Schweißvorgangs erfolgen.

Bei einem Verfahren zum Verbinden wenigstens zweier Elemente aus metallischem Material, insbesondere aus Aluminium oder einer Aluminiumlegierung, wobei zumindest ein erstes Element eine Deckschicht als Teil eines Verbundwerkstoffs darstellt, welcher einen insbesondere wärmeempfindlichen Kern und wenigstens eine äußere Deckschicht aufweist, wird vorgeschlagen, dass die Verbindung zumindest abschnittsweise mittels schmelzbadgesichertem Schmelzschweißen und/oder schmelzbadgesichertem Löten, insbesondere Hartlöten, durchgeführt wird, derart, dass zwischen aufgeschmolzenem Bereich und Kern zumindest in einem wesentlichen Zeitraum eine nicht aufgeschmolzene Schicht verbleibt.

Das vorgeschlagene Verfahren weist die im Zusammenhang mit der vorgeschlagenen Verbindung genannten Vorteile in analoger Weise auf.

Die Unteransprüche geben vorteilhafte Weiterbildungen des vorgeschlagenen Verfahrens an, welche ebenfalls in analoger Weise die im Zusammenhang mit der vorgeschlagenen Verbindung genannten Vorteile.aufweisen.

Weiterhin wird die Verwendung einer Verbindung der oben beschriebenen Art und/oder die Verwendung eines oben beschriebenen Verfahrens zur Ausbildung mehrstückiger Verbundwerkstoffe, insbesondere zur Ausbildung von großformatigen Verbundplatten vorgeschlagen. Besonders bei der Herstellung großformatiger Platten, wie sie beispielsweise für Busdächer oder als Dach- und Seitenwände für LKW's verwendet werden, ist die Herstellung einstückiger großformatiger Platten oftmals derart aufwändig, dass miteinander verbundene kleinformatigere Platten kostengünstiger sind, ohne dass dies einen bedeutenden Qualitätsverlust nach sich zöge.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1: zwei miteinander verbundene Verbundplatten gemäß einem ersten Ausführungsbeispiel der Erfindung im seitlichen Querschnitt;
- Fig. 2: zwei miteinander zu verbindende Verbundplatten zur Ausbildung einer Verbindung gemäß einem zweiten Ausführungsbeispiel der Erfindung im seitlichen Querschnitt;
- Fig. 3: zwei miteinander verbundene Verbundplatten gemäß einem dritten Ausführungsbeispiel der Erfindung im seitlichen Querschnitt;
- Fig. 4: eine Verbindung gemäß einem vierten Ausführungsbeispiel der Erfindung im seitlichen Querschnitt;
- Fig. 5: eine winkelartig aufeinander gefaltete Verbundwerkstoffplatte mit einer Verbindung gemäß einem fünften Ausführungsbeispiel der Erfindung im seitlichen Querschnitt;
- Fig. 6: eine präparierte Verbundplatte zur Ausbildung der in Fig. 5 gezeigten Verbindung im seitlichen Querschnitt;
- Fig. 7: ein randseitiger Abschluss einer Verbundplatte gemäß einem sechsten Ausführungsbeispiel der Erfindung im seitlichen Querschnitt;
- Fig. 8: ein präparierter Rand einer Verbundwerkstoffplatte zur Ausbildung der in Figur 7 dargestellten Verbindung im seitlichen Querschnitt;
- Fig. 9: ein randseitiger Abschluss einer Verbundplatte gemäß einem siebten Ausführungsbeispiel der Erfindung im seitlichen Querschnitt;
- Fig. 10: eine Verbindung einer Aluminiumplatte mit einer Verbundplatte gemäß einem achten Ausführungsbeispiel der Erfindung im seitlichen Querschnitt;
- Fig. 11: ein randseitiger Abschluss einer Verbundplatte gemäß einem neunten Ausführungsbeispiel der Erfindung im seitlichen Querschnitt;
- Fig. 12: ein randseitiger Abschluss einer Verbundplatte gemäß einem zehnten Ausführungsbeispiel der Erfindung im seitlichen Querschnitt;
- Fig. 13: ein randseitiger Abschluss einer Verbundplatte gemäß einem elften Ausführungsbeispiel der Erfindung im seitlichen Querschnitt;
- Fig. 14: ein randseitiger Abschluss einer Verbundplatte gemäß einem zwölften Ausführungsbeispiel der Erfindung im seitlichen Querschnitt;
- Fig. 15: ein randseitiger Abschluss einer Verbundplatte gemäß einem dreizehnten Ausführungsbeispiel der Erfindung im seitlichen Querschnitt.

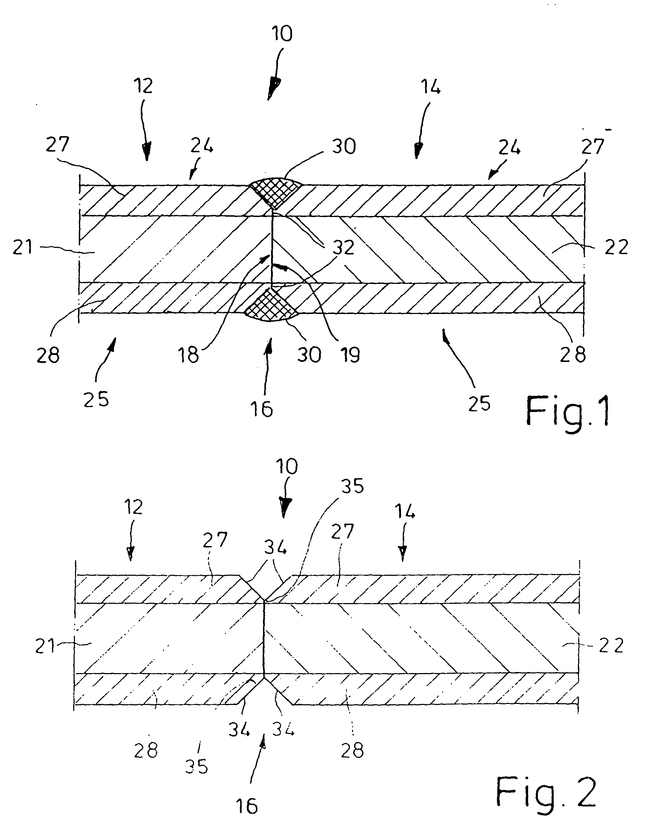

Fig. 1 zeigt im Querschnitt eine in einem Verbindungsbereich 16 ausgebildete Verbindung 10 zweier Verbundplatten 12, 14, wobei die Verbundplatten 12, 14 in einem Verbindungsbereich 16 mit ihren seitlichen Stirnflächen 18, 19 aneinanderstoßen. Die beiden Verbindungsplatten 12, 14 weisen jeweils einen Kern 21, 22 auf, der jeweils an seiner Oberseite 24 mit einer Decklage 27, 28 flächig bedeckt ist.

Im vorliegenden Beispiel handelt es sich bei den Kernen 21, 22 jeweils um ein Schaumstoffmaterial. Ebenso sind jedoch beliebige andere Kernmaterialien wie beispielsweise Holz (insbesondere Balsaholz), eine wabenartige Struktur, Kunststoffe, Aluminiumschaum oder ähnliches denkbar.

Als Decklagen 27, 28 finden vorliegend Schichten aus einer Aluminiumlegierung Anwendung. Hier sind jedoch ebenfalls beliebige andere Materialien denkbar, insbesondere metallische Materialien, sofern diese mittels Löten und/oder Schweißen miteinander verbindbar sind. Obwohl im in Fig. 1 dargestellten Ausführungsbeispiel die Kernmaterialien 21, 22 sowie die Decklagen 27, 28 jeweils aus dem gleichen Material bestehen, können mit der Erfindung prinzipiell auch unterschiedlich ausgebildete Verbundplatten 12, 13 miteinander verbunden werden.

Wie aus Fig. 1 ersichtlich, sind die oberen und unteren Decklagen 27, 28 jeweils im Verbindungsbereich 16 durch jeweils eine Schweißnaht 30 miteinander verbunden. Die Schweißnaht 30 ist dabei so ausgeführt, dass in einem den Kernen 21, 22 zugewandten Bereich der Decklagen 27, 28 ein nicht aufgeschmolzener Bereich 32 verbleibt. Dank dieses nicht aufgeschmolzenen Bereichs 32 wird das Kernmaterial 21, 22 während des Verbindungsvorgangs (vorliegend Ausbildung von Schweißnähten 30) mit einer geringeren thermischen Beaufschlagung belastet. Die Wahrscheinlichkeit für eine Zersetzung der Kerne 21, 22 der Verbundplatten 12, 14 wird dadurch reduziert. Ebenso wird die Wahrscheinlichkeit verringert, dass sich die Decklagen 27, 28 vom jeweiligen Kern 21, 22 lösen.

Zur Verstärkung der Verbindung kann weiterhin zwischen den einander gegenüberstehenden Stirnflächen 18, 19 im Kernbereich 21, 22 der Verbundplatten 12, 14 ein Klebstoff aufgetragen werden, der nach seiner Aushärtung für einen zusätzlichen Halt sorgt.

Selbstverständlich ist es auch möglich, dass es sich bei den in Fig. 1 dargestellten Nähten 30 um Lötnähte, insbesondere um Hartlötnähte handelt. Auch hier wird die Temperaturbelastung, die auf die Kerne 21, 22 einwirkt, dadurch verringert, dass zwischen den Nähten 30 und den Kernen 21, 22 ein nicht aufgeschmolzener Bereich 32 verbleibt.

Als besonders vorteilhaftes Schweißverfahren im Zusam menhang mit der Erfindung haben sich Laserschweißverfahren erwiesen. Als Laser kommen dabei sowohl Festkörperlaser, als auch Gaslaser in Betracht. Rein beispielhaft kommen CO₂-Laser, Diodenlaser, Rubinlaser, Nd-YAG-Laser, Farbstofflaser (insbesondere durchstimmbare Farbstofflaser) usw. in Betracht. Auch ist es unerheblich, ob ein Wärmeleitungsschweißverfahren oder ein Tiefschweißverfahren Anwendung findet.

In Fig. 2 ist kurz angedeutet, wie die Decklagen 27, 28 zweier Verbundplatten 12, 14 in einem Verbindungsbereich 16 vorbereitet werden können, um die Ausbildung einer schmelzbadgesicherten Lötnaht zu ermöglichen. Dazu werden die Decklagen 27, 28 in der Nähe des Verbindungsbereichs jeweils mit einer Abschrägung 34 versehen. Die dadurch in der Oberfläche des Verbunds 10 entstehende Ausnehmung kann mit dem Lotmaterial befüllt werden. Der in der Verbindungszone 16 verbleibende Stumpfbereich 35 ist von seiner Dicke her so gewählt, dass dieser durch das Ausbilden der Lötnaht 30 nicht vollständig verflüssigt wird, so dass zwischen den Lötnähten 30 und den Kernbereichen 21, 22 der beiden Verbundplatten 12, 14 ein nicht verflüssigter Bereich 32 verbleibt.

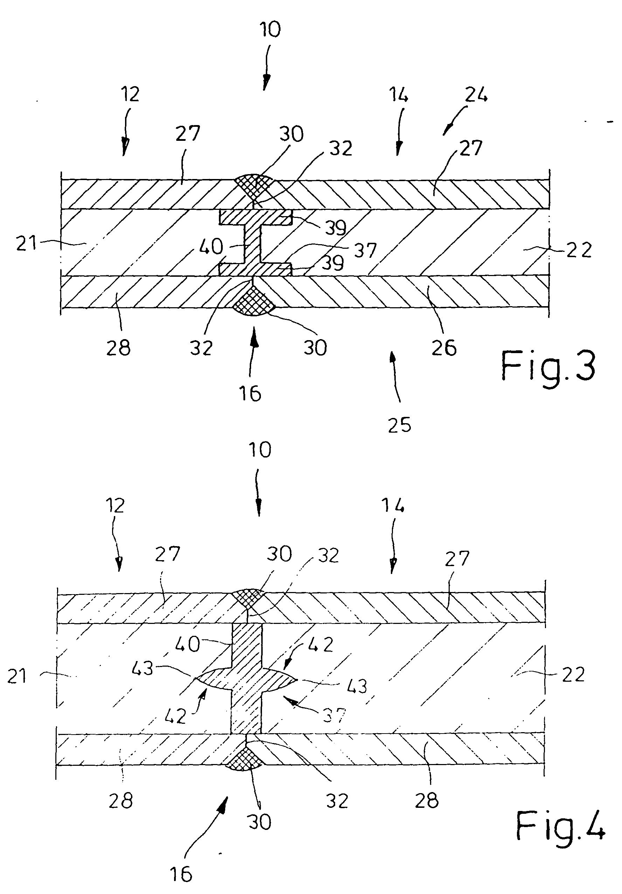

In Fig. 3 ist ein Verbund 10 aus zwei miteinander verbundenen Verbundplatten 12, 14 dargestellt, bei dem im Verbindungsbereich 16 eine zusätzliche Schmelzbadsicherung 37 vorgesehen ist. Die zusätzliche Schmelzbadsicherung 37 besteht aus zwei streifenartigen Bereichen 39, welche zwischen den Decklagen 27, 28 und den Kernbereichen 21, 22 der beiden Verbundplatten 12, 14 vorgesehen sind. Die streifenartigen Bereiche 39 der Schmelzbadsicherung 37 befinden sich in korrespondierenden Ausnehmungen, die in den Kernbereichen 21, 22 der Verbundplatten 12, 14 ausgebildet sind. Die streifenartigem Bereiche 39 dienen somit als Hinterlage für die Schweißnähte 30, die die beiden Verbundplatten 12, 14 miteinander verbinden.

Weiterhin sind die streifenartigen Bereiche 39 der Schmelzbadsicherung 37 durch einen Verbindungssteg 40 miteinander verbunden. Dies bewirkt eine zusätzliche mechanische Stabilisierung des Verbunds 10 aus den beiden Verbundplatten 12, 14 in seinem Verbindungsbereich 16.

Vorteilhafterweise sind die Kontaktflächen zwischen Schmelzbadsicherung 37 und Kernen 21, 22 beziehungsweise Decklagen 27, 28 mit einer Klebstofflage zusätzlich mechanisch miteinander verbunden.

Die zusätzliche Schmelzbadsicherung 37 besteht im vorliegenden Ausführungsbeispiel aus einem thermisch isolierenden Material. Die zur Ausbildung der Schweißnähte 30 im Verbindungsbereich 16 des Plattenverbunds 10 eingetragene Wärme wird daher nur schlecht weitergeleitet, so dass die Kerne 21, 22 der beiden Verbundplatten 12, 14 einer nur sehr geringen thermischen Belastung ausgesetzt werden.

Obgleich wie in Fig. 3 dargestellt ein nicht aufgeschmolzener Bereich 32 in den Decklagen 27, 28 verbleibt, der eine zusätzliche thermische Isolierung zwischen den Schweißnähten 30 und den Kernen 21, 22 bewirkt, ist es bei Benutzung einer zusätzlichen Schmelzbadsicherung 37 prinzipiell auch möglich, dass die Schweißnaht 30 die komplette Dicke der Decklagen 27, 28 aufschmilzt. Dies kann gegebenenfalls eine bessere mechanische Festigkeit der Schweißnähte 30 bewirken.

Wie leicht ersichtlich ist, kann die zusätzliche Schmelzbadsicherung 37, insbesondere bei einem entsprechend festen Kernmaterial der Kerne 21, 22 zusätzlich als Positionierungshilfe beziehungsweise als Montagehilfe dienen, wodurch die Justierung und Fixierung der Bauteile zueinander im Fertigungsprozess vereinfacht werden kann. Auch kann die zusätzliche Schmelzbadsicherung eine zusätzliche mechanische Verbindung des Plattenverbunds 10 bewirken.

Gegebenfalls ist an den Stirnseiten der Verbundplatten 12, 14 im Kernbereich 21, 22 ein Materialabtrag vorzusehen, damit die zusätzliche Schmelzbadsicherung eingefügt werden kann.

Zwar ist im in Figur 3 gezeigten Ausführungsbeispiel die zusätzliche Schmelzbadesicherung 37 einstückig ausgebildet, jedoch ist es auch denkbar, dass die Schmelzbadsicherung 37 zwei- oder mehrteilig, insbesondere in Form zweier spiegelbildlich symmetrischer Teile (im Verhältnis zur Kontaktebene der beiden Verbundplatten 12, 14) ausgebildet sind. Ein Vorsehen derartiger zusätzlicher Schmelzbadsicherungen 37 kann dann auch beispielsweise ab Werk erfolgen.

Fig. 4 ist ein seitlicher Querschnitt durch einen Plattenverbund 10 aus zwei miteinander durch Schweißnähte 30 verbundenen Verbundplatten 12, 14, bei dem ein weiteres mögliches Ausführungsbeispiel einer zusätzlichen Schmelzbadsicherung 37 verwendet wird. Analog zur Beschreibung des vorigen Ausführungsbeispiels dienen die nicht aufgeschmolzenen Bereiche 32 sowie die zusätzliche Schmelzbadsicherung 37 dem thermischen Schutz der Kernbereiche 21, 22 der Verbundelemente 12, 14, während die Schweißnähte 30 ausgebildet werden. Ebenso wie im vorigen Ausführungsbeispiel, kann aufgrund der Verwendung einer zusätzlichen Schmelzbadsicherung 37 gegebenenfalls auf nicht aufgeschmolzene Bereiche 32 der Decklagen 27, 28 verzichtet werden.

Die in Fig. 4 dargestellte zusätzliche Schmelzbadsicherung 37 besteht im Wesentlichen aus einem Verbindungssteg 40, der jeweils im Verbindungsbereich 16 der beiden Verbundplatten 12, 14 eine Hinterlage für die Deckschichten 27, 28 bildet. Die Dicke des Verbindungsstegs 40 wird entsprechend der Anforderungen, insbesondere hinsichtlich der Anforderungen an die thermische Isolation der Kerne 21, 22, gewählt.

Etwa in der Mitte des Verbindungsstegs 40 ist bei der zusätzlichen Schmelzbadsicherung 37, wie sie in Fig. 4 dargestellt ist, jeweils in beide Richtungen ein stegartiger Vorsprung 42 vorgesehen. Die stegartigen Vorsprünge 42 sind an ihren Enden jeweils mit einer Spitze 43 ausgeformt, so dass sie bei einem entsprechenden Kernmaterial 21, 22 selbsttätig in das Kernmaterial 21, 22 eindringen können. Gegebenenfalls können an den Außenkonturen der stegartigen Vorsprünge 42 eine Art Widerhaken vorgesehen werden, so dass sich die zusätzliche Schmelzbadsicherung 37 in den entsprechenden Kernen 21, 22 verkrallt. Auch in diesem Fall kann die zusätzliche Schmelzbadsicherung 37 als zusätzliche Positions- beziehungsweise Montagehilfe dienen, und auch nach Ausbildung der Schweißnähte 30 eine zusätzliche mechanische Festigkeit bewirken.

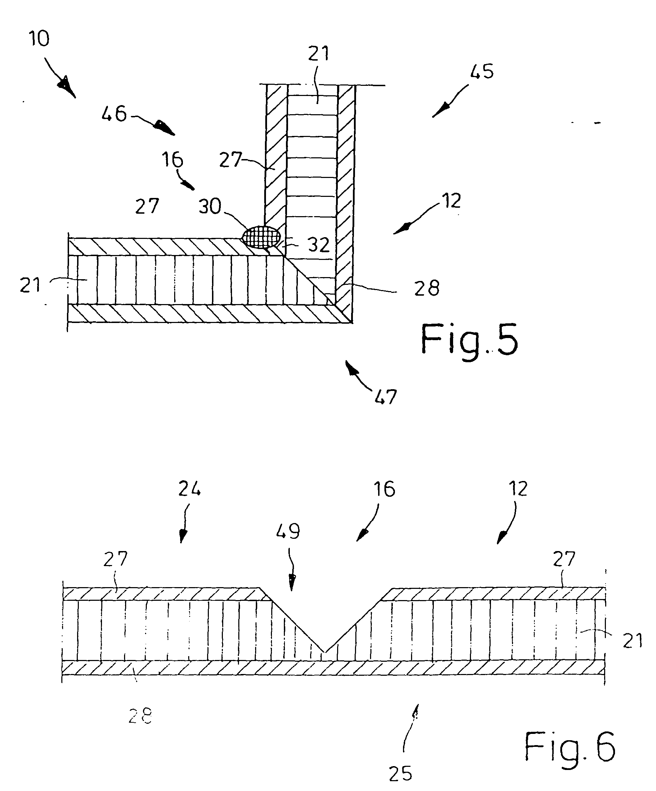

Aus Fig. 5 ist ersichtlich, wie eine schmelzbadgesicherte Verbindung 10 zur Ausbildung einer Kante 45 bei einer Verbundplatte 12 genutzt werden kann. An der Außenseite der Kante 47 ist die Decklage 28 der Verbundplatte 12 durchgängig. Die jeweiligen Bereiche des Kerns 21 der Verbundplatte 12 sind so präpariert, dass sie im vorliegend dargestellten zusammengefalteten Zustand lückenlos aufeinanderliegen und können beispielsweise durch eine zusätzliche Klebeverbindung mechanisch aneinander fixiert werden.

An der Innenseite 46 werden die beiden Teile der Decklage 27 durch eine Schweißnaht 30 miteinander verbunden. Auch hier wird die Schweißnaht 30 als schmelzbadgesicherte Schweißnaht 30 ausgeführt, also so durchgeführt, dass zwischen Schweißnaht 30 und Kern 21 ein nicht aufgeschmolzener Bereich 32 verbleibt, und es so zu keiner thermischen Beschädigung des Kerns 21 kommt.

In Fig. 6 ist schließlich noch dargestellt, wie eine Verbundplatte 12 vorbereitet werden kann, um die in Fig. 5 dargestellte Kante 45 auszubilden. Dazu wird eine vorliegend dreieckförmige Nut 49 im späteren Verbindungsbereich 16 der Verbundplatte 12 vorgesehen. Die dreieckförmige Nut 49 durchgreift dabei die an der Oberseite 24 (spätere Innenseite 46) liegende Decklage, sowie den Kern 21 der Verbundplatte. Die an der Unterseite 25 (spätere Außenseite 47) befindliche Decklage 27 wird dagegen nicht angeschnitten.

Zur Ausbildung der in Fig. 5 gezeigten Kante werden die beiden Hälften der Verbindungsplatte 12 zusammengeklappt, und anschließend wird die Verbindungsnaht 30 ausgebildet.

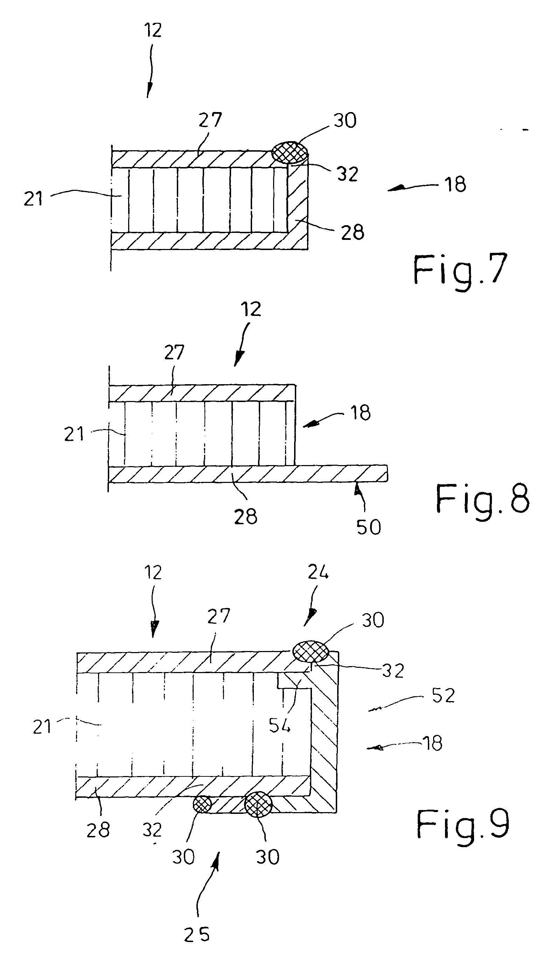

In Fig. 7 ist dargestellt, wie unter Verwendung einer schmelzbadgesicherten Schweißnaht 30 der Kern 21 an einer Stirnseite 18 der Verbindungsplatte 12 durch Überdecken mit einer Schutzlage gesichert werden kann. Dadurch kann beispielsweise ein Brandschutz bei einem brennbaren Kernmaterial 21 realisiert werden.

In Fig. 8 ist skizziert, auf welche Weise die Verbundplatte 12 zur Ausbildung des in Fig. 7 dargestellten Abschlusses vorbereitet werden kann. Dazu wird im Bereich der Stirnfläche 18 einer Verbundplatte 12 die obere Decklage 27 sowie der Kern 21 über eine Strecke hinweg entfernt, deren Länge in etwa der Dicke der Verbundplatte 12 entspricht. Die untere Decklage 28 des Verbundmaterials 12 wird dagegen nicht entfernt, so dass ein vorstehender Abschnitt 50 der unteren Decklage 28 entsteht. Dieser vorstehende Abschnitt 50 wird anschließend nach oben geklappt und mit der oberen Decklage 27 derart verschweißt, dass sich die in Fig. 7 dargestellte Struktur ergibt. Die Schweißnaht 30 wird dabei so ausgeführt, dass zwischen Schweißnaht 30 und Kern 21 ein nicht aufgeschmolzener Bereich 32 verbleibt, so dass der Kern 21 nicht übermäßig thermisch beansprucht wird.

In Fig. 9 ist eine weitere Möglichkeit dargestellt, wie die Stirnseite 18 eines Verbundelements 12 abgedeckt werden kann, so dass der Kern 21 vor äußeren Einwirkungen geschützt wird. Dazu wird im vorliegenden Ausführungsbeispiel eine gesonderte Abdeckkappe 52 auf die Stirnseite 18 der Verbundplatte 12 aufgesetzt. Die Abdeckkappe 52 dient dabei gleichzeitig als zusätzliche Schmelzbadsicherung. Dabei ist die Abdeckkappe 52 im Bereich der Oberseite 24 des Verbundelements 12 in Form einer als Hinterlage wirkenden Schmelzbadsicherung ausgebildet. Im vorliegenden Ausführungsbeispiel ist somit neben dem zwischen Schweißnaht 30 und Kern 21 verbleibenden nicht aufgeschmolzenen Bereich 32 zusätzlich ein stegartiger Vorsprung 54 vorgesehen, der eine zusätzliche thermische Isolierung zwischen Schweißnaht 30 und Kern 21 zur Verfügung stellt. Im Bereich der Unterseite 25 der Verbundplatte 28 liegt die Abdeckkappe 52 dagegen als als Auflage ausgebildete zusätzliche Schmelzschutzeinrichtung vor. Auch in diesem Bereich verbleibt im dargestellten Ausführungsbeispiel zwischen Schweißnaht 30 und Kernmaterial 21 ein nicht aufgeschmolzener Bereich 32 der unteren Deckschicht 28. Durch entsprechende Ausnehmungen beziehungsweise niedrig schmelzende Materialien im Bereich der späteren Schweißnähte 30 kann die Abdeckkappe 52 nämlich so ausgebildet werden, dass die Schweißnaht 30 einen entsprechend dicken, nicht aufgeschmolzenen Bereich 32 in der unteren Decklage 28 hinterlässt. Selbstverständlich ist es auch hier möglich, dass anstelle einer Schweißnaht 30 eine Lötnaht 30, insbesondere ein Hartlötnaht 30 ausgebildet wird.

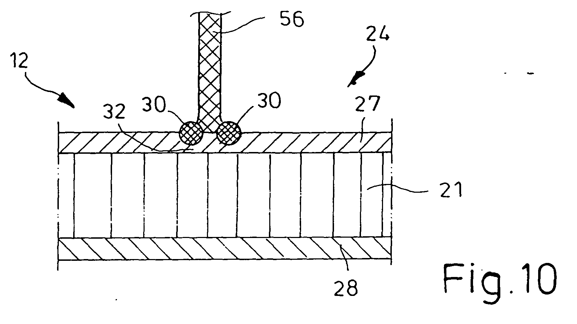

In Fig. 10 ist schließlich noch skizziert, wie die vorgeschlagenen schmelzbadgesicherten Schweißnähte 30 beziehungsweise Lötnähte 30 auch zur Verbindung eines Metallelements 56 mit einer Verbundplatte 12 verwendet werden können. Das Metallelement 56 ist also kein Verbundelement.

Im Ausführungsbeispiel ist das Metallelement 56 mittels zweier seitlich angebrachter Schweißnähte 30 mit der oberen Decklage 27 auf der Oberseite 24 des Verbundelements 12 mit diesem verbunden. Analog zu den bislang beschriebenen Ausführungsbeispielen sind auch hier die Schweißnähte 30 derart ausgeführt, dass zwischen den Schweißnähten 30 und dem Kern 21 nicht aufgeschmolzene Bereiche 32 verbleiben und auf diese Weise eine Schmelzbadsicherung erzielt wird.

Selbstverständlich ist es ebenso denkbar, dass auch bei dieser Verbindungsanordnung eine zusätzliche Schmelzbadsicherung vorgesehen wird.

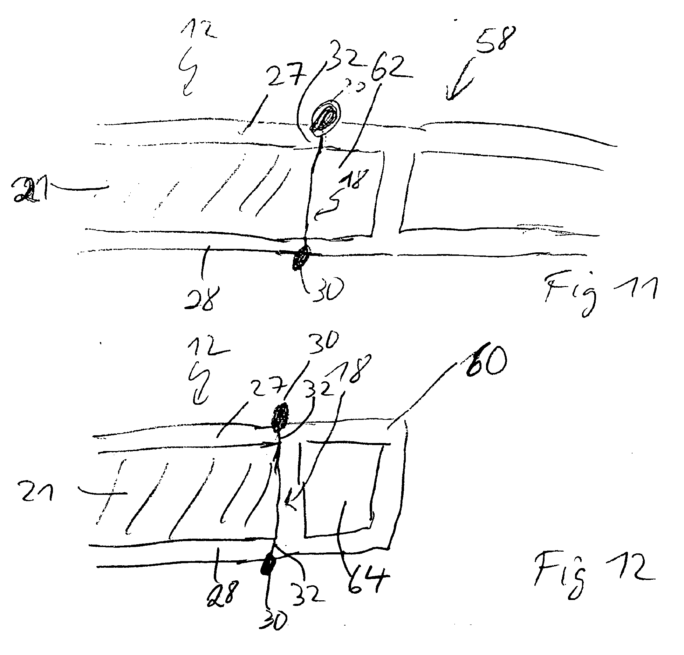

In Fig. 11 ist dargestellt, wie unter Verwendung von schmelzbadgesicherten Schweißnähten 30 der Kern 21 einer ersten Verbundplatte 12 durch Verbindung mit einem Anschlussprofil 58 nach außen hin abgedeckt werden kann.

Im in Fig. 11 dargestellten Ausführungsbeispiel ist das Anschlussprofil 58 so ausgebildet, dass benachbart zum Kern 21 der ersten Verbundplatte 12 ein hohler Kopfraum 62 vorhanden ist. Es ist denkbar, dass der Kopfraum 62 unterschiedlich groß ausfällt und gegebenenfalls sogar keinerlei Kopfraum 62 vorgesehen wird. Auch ist es möglich, dass die Größe bzw. das Vorhandensein eines Kopfraums 62 längs der Verbindungszone zwischen erster Verbindungsplatte 12 und Anschlussprofil 58 variiert. Das Anschlussprofil 58 kann im Übrigen eine weitgehend beliebige Form aufweisen, wobei es sich beispielsweise um einen T-Träger, ein U-förmiges Profil, ein V-förmiges Profil, ein gebogenes Profil oder auch um eine einfache Platte handeln kann. Mit dem vorgeschlagenen Aufbau kann ein besonders einfacher Übergang zwischen normalen Bauelementen und Verbundplatten geschaffen werden. Der entstehende Kopfraum 62 kann beispielsweise zur Hinterlüftung oder zu Belüftungszwecken dienen, oder beispielsweise vor oder nach Ausbildung der Schweißnähte 30 mit einem Material verfüllt werden.

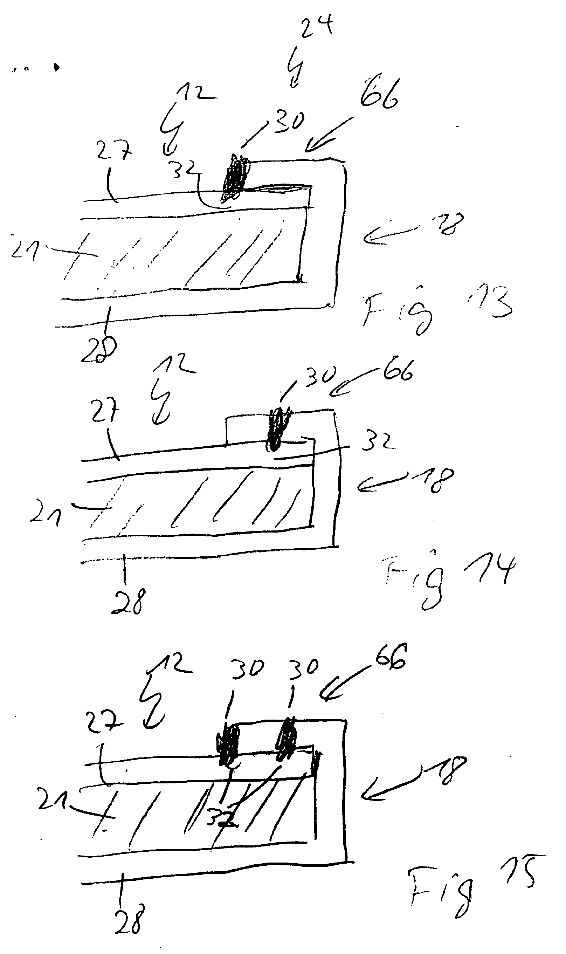

In Fig. 12 ist ein weiteres Ausführungsbeispiel für einen Kantenabschluss einer ersten Verbundplatte 12 mit einem vorliegend als Anschlusshohlprofil 60 ausgebildeten Anschlussprofil dargestellt. Im dargestellten Ausführungsbeispiel liegt die seitliche Stirnfläche 18 des Kerns 21 im Wesentlichen bündig mit der dazu benachbarten Außenseite des Anschlusshohlprofils 60 an. Ähnlich wie in Fig. 11 beschrieben kann auch hier der Hohlraum 64 des Anschlusshohlprofils 60 Belüftungszwecken dienen, mit einem Material verfüllt werden oder auch beispielsweise zum Durchgang eines Fluids, beispielsweise für Heiz- oder Kühlzwecke, dienen.

In Fig. 13 ist ein weiteres Ausführungsbeispiel eines Kantenabschlusses für eine erste Verbundplatte 12 dargestellt. Das dargestellte Ausführungsbeispiel ähnelt dem in Fig. 7 dargestellten Ausführungsbeispiel, wobei die untere Decklage 28 eine solche Länge aufweist, dass sich an der Oberseite 24 der ersten Verbundplatte 12 zwischen oberer Decklage 27 und unterer Decklage 28 der Verbundplatte 12 ein Überlappungsbereich 66 ergibt. In den Fig. 13 bis 15 sind unterschiedliche Anordnungsmöglichkeiten für eine bzw. mehrere Schweißnähte 30 dargestellt. Es können insbesondere randseitige Schweißnähte 30 (Fig. 13), innenliegende Schweißnähte 30 (Fig. 14) oder auch Kombinationen daraus (Fig. 15) vorgesehen werden. Die Anzahl der vorzusehenden Schweißnähte 30 kann selbstverständlich variieren.

Es wird angemerkt, dass der vorgeschlagene Randabschluss auch dann von Vorteil sein kann, wenn bei der Ausbildung einer, mehrerer oder aller Schweißnähte 30 auf eine Schmelzbadsicherung 32 des bzw. der Schweißnähte 30 verzichtet wird.

Ein Teilaspekt der Erfindung kann - auch eigenständig - wie folgt aufgefasst werden.

Die Herstellung von Verbundwerkstoffen geschieht meist in Form von Platten. Bei derartigen Platten ist der zwischen den üblicherweise metallischen Deckplatten befindliche Kern seitlich von außen her zugänglich. Dies betrifft auch Fälle, in denen entsprechende Verbundwerkstoffe vor deren Einbau entsprechend zurecht geschnitten wurden.

Derartige freiliegende Kerne sind jedoch problematisch, weil hier der Kern äußeren Einflüssen ausgesetzt ist. Dies betrifft beispielsweise chemische, mechanische oder thermische Einwirkungen von außen. Dabei ist nicht nur an übliche Alterserscheinungen (wie z. B. Verwitterung oder Alterung während der üblichen, funktionsbestimmungsgemäßen Verwendung) zu denken, sondern auch an außergewöhnliche Vorfälle, die es zu beherrschen gilt. Beispielsweise ist in diesem Zusammenhang an eine entsprechende Brandsicherheit zu denken.

Aus diesem Grunde ist die nach wie vor weitverbreitete Methode, den Kantenabschluss nach außen hin offen und unbehandelt zu lassen, wenig wünschenswert. Auch optisch ist dies oftmals wenig wünschenswert.

Verbreitet wurde der Versuch unternommen, die Kanten durch den Auftrag eines Lackes zu schützen. Derartige Lacke sind jedoch relativ empfindlich gegenüber mechanischen Beeinträchtigungen. Darüber hinaus kann die Optik gegebenenfalls leiden.

Zum Teil wurde auch versucht, die Kanten mit Plastikprofilen zu überdecken. Auch dies kann die Optik der Anordnung beeinträchtigen. Darüber hinaus sind Kunststoffe in aller Regel ebenfalls relativ temperatur- bzw. feuerempfindlich.

Weiterhin sollte bei jeglicher Art der Ausbildung eines Randabschlusses von Verbundplatten darauf geachtet werden, dass bei der Ausbildung dieses Randabschlusses der Kern nicht in Mitleidenschaft gezogen wird. So können sich Schweiß- beziehungsweise Hartlöttechniken als problematisch erweisen. Da bei Schweiß- und Lötvorgängen unvermeidbar eine nicht unerhebliche Prozesstemperatur zum Aufschmelzen der zu verbindenden Materialien einher geht, kommen solche Techniken nur für thermisch stabile Materialien in Frage. Gerade bei Verbundmaterialien ist dies jedoch häufig nicht gegeben. Werden beispielsweise als Kernmaterialien wärmeempfindliche oder wärmezersetzbare Materialien wie Kunststoffe verwendet, so bewirkt ein Schweißvorgang eines Deckelements des Verbundwerkstoffs eine Beschädigung, Zerstörung beziehungsweise Zersetzung des Kernmaterials. Durch eine Zersetzung beziehungsweise ein Verbrennen des Kernmaterials können wiederum in unkontrollierbarer Weise Gase oder Dämpfe entweichen, die die Bildung einer gleichmäßigen und porenfreien Schweißnaht verhindern. Dadurch wird eine mechanisch stabile und dauerhafte Verbindung oft unmöglich. Zudem bewirkt die Zersetzung des Kernmaterials im Bereich der Schweißnaht eine entsprechende Schwächung der mechanischen Eigenschaften des Kerns und damit der gesamten Verbindung.

In Kenntnis dieses Standes der Technik hat es sich der Erfinder zur Aufgabe gemacht, eine Abdeckvorrichtung, welche an einem, zumindest eine metallartige Deckschicht und zumindest einen Kern aufweisenden Verbundmaterial ausgebildet ist, vorzuschlagen, welche die nach dem Stand der Technik immanenten Probleme nach Möglichkeit beseitigt oder zumindest verringert. Insbesondere soll eine möglichst einfache, kostengünstig herstellbare und dennoch dauerhaft stabile und den Kern weitgehend schützende Abdeckvorrichtung vorgeschlagen werden.

Dabei wird eine Abdeckvorrichtung, welche an einem, zumindest eine metallartige Deckschicht und zumindest einen Kern aufweisenden, Verbundmaterial ausgebildet ist, derart ausgebildet, dass die Abdeckvorrichtüng den Kern des Verbundmaterials zumindest bereichsweise überdeckt und die Abdeckvorrichtung zumindest ein Abdeckmittel aufweist, welches zumindest bereichsweise wenigstens eine Schweißnaht und/oder Lötnaht aufweist. Dadurch kann ein besonders guter Schutz des Kerns vor äußeren Einflüssen - gleich ob thermischer, chemischer oder mechanischer Art - realisiert werden. Bei einer geeigneten Auswahl der Materialien für die Abdeckvorrichtung bzw. das Abdeckmittel kann eine auf den jeweiligen Einsatzzweck besonders gut angepasste Wirkung realisiert werden. Insbesondere ist ein Kompromiss zwischen einer besonders kostengünstigen Ausbildung der Abdeckvorrichtung einerseits und einem besonders guten und dauerhaften Schutz des Kerns des Verbundmaterials andererseits möglich.

In diesem Zusammenhang ist unter einem Schutz des Kernes nicht nur an eine Ausbildung der Abdeckvorrichtung zu denken, die den Kern unter normalen Betriebsbedingungen (üblicher Verschleiß usw.) schützt, sondern auch an zu beherrschende Ausnahmesituationen zu denken, beispielsweise an ein Feuer. Bei einer entsprechenden Auslegung der Abdeckvorrichtung kann so beispielsweise die Stabilität einer Flugzeughülle oder der Wände von Fahrzeugen oder Gebäuden auch im Falle eines Brandes zumindest für eine gewisse Zeitdauer aufrecht erhalten werden.

Unter einem "Schutz des Kernes" ist insbesondere ein Schutz des ⁻Kernes vor thermischer Zersetzung, chemischer Zersetzung und Entzündung zu verstehen. Auch kann der Schutz dahingehend verstanden werden, dass durch eine thermische Zersetzung im Inneren der Verbundplatte entstehende Gase nicht in unkontrollierter Weise nach außen gelangen können. Dies schließt es selbstverständlich nicht aus, dass geeignete Entlüftungsöffnungen vorgesehen werden können, durch die entstehende Zersetzungsgase in eine Sollrichtung abgeleitet werden können.

Dank der vorgeschlagenen Ausbildung mit einer Schweißnaht und/oder Lötnaht kann eine besonders feste und dauerhafte Befestigung der Abdeckvorrichtung am Verbundmaterial realisiert werden, ohne dass ein übertriebener Herstellungsaufwand betrieben werden müsste, und ohne dass beispielsweise Schwächungen des behandelten Materials zwangsweise auftreten müssten.

Eine vorteilhafte Weiterbildung ergibt sich, wenn zumindest ein metallartiges Material und/oder eine Abdeckvorrichtung zumindest bereichsweise aus Aluminium oder einer Aluminiumlegierung besteht. Aluminium bzw. Aluminiumlegierungen sind für viele Einsatzzwecke besonders vorteilhafte Materialien, so dass einer entsprechenden Weiterbildung der entsprechenden Bauteile eine entsprechende wirtschaftliche und technische Bedeutung zukommt.

Von Vorteil ist es, wenn das Abdeckmittel zumindest bereichsweise aus einer metallartigen Deckschicht des Verbundmaterials gebildet ist. In diesem Falle kann eine gegebenenfalls unvermeidliche Verdickung des Verbundmaterials im Bereich der Abdeckvorrichtung üblicherweise vermieden bzw. zumindest verringert werden. Auch kann ein optisch harmonischer Übergang realisiert werden. Darüber hinaus kann dadurch ein besonders einfacher und kostengünstiger Aufbau der Abdeckvorrichtung ermöglicht werden.

Möglich ist es auch, wenn das Abdeckmittel zumindest bereichsweise als gesonderte Einrichtung ausgebildet ist. In diesem Fall kann die Abdeckvorrichtung, insbesondere das Abdeckmittel, besonders vorteilhaft auf den jeweiligen Einsatzzweck angepasst werden.

Wenn die Abdeckvorrichtung zumindest bereichsweise wenigstens einen Überlappungsbereich aufweist, kann eine nochmals gesteigerte mechanische Stabilität der vorgeschlagenen Abdeckvorrichtung realisiert werden.

Gemäß einer zur bevorzugenden Weiterbildung kann die Abdeckvorrichtung wenigstens zwei Schweißnähte und/oder Lötnähte auf zumindest einer Seite des Verbundmaterials aufweisen. Auch gemäß dieser Weiterbildung kann eine nochmals erhöhte mechanische Festigkeit und besondere Dichtigkeit, insbesondere gegenüber Flüssigkeiten und Gasen, realisiert werden.

Von Vorteil ist es, wenn zumindest eine Schweißnaht und/oder Lötnaht zumindest bereichsweise als schmelzbadgesicherte Schweißnaht bzw. Lötnaht ausgebildet ist. Unter einer schmelzbadgesicherten Naht ist im vorliegenden Zusammenhang die Rede, wenn während des Verbindungsvorgangs zumindest eine nicht aufgeschmolzene Schicht zwischen aufgeschmolzenem Bereich und Kern verblieben ist. Dadurch kommt es zu keiner direkten Verbindung zwischen der Schmelze und den wärmeempfindlichen Materialien, wie dem Kern bzw. einer Laminationsschicht zwischen Kern und Deckschicht. Eine solche nicht aufgeschmolzene Schicht weist nämlich in der Regel ein geringeres Wärmeübertragungsvermögen als eine aufgeschmolzene Schicht auf. Insbesondere kann eine Materiallage in festem Aggregatszustand - im Gegensatz zu einer Flüssigkeit - keine Wärme durch Konvektion übertragen. Dadurch kann ein wirksamer Schutz für temperaturempfindliche Bereiche vor einer übermäßigen Wärmebeaufschlagung erzielt werden. Unter wärmeempfindlich ist hier jegliche Veränderung im Material, welche durch Wärme bedingt ist, zu verstehen. Insbesondere kommt - wie auch oben erwähnt - eine Zersetzung, Verformung sowie eine Zerstörung des wärmeempfindlichen Materials in Betracht. Es kann sich dabei um einen wärmezersetzbaren Kern handeln aber auch um sonstige wärmekritische Materialien wie beispielsweise Klebstoffe (z. B. zur Verbindung von Kern und Deckplatten), Beschichtungen, Aufdrucke usw.

Vorzugsweise kommt es während des Verbindungsvorgangs zu keinerlei Verbindung zwischen aufgeschmolzenem Material und temperaturempfindlichen Bereichen. Jedoch führt ein hinreichend kurzfristiger oder ein nur abschnittsweiser oder punktueller Kontakt nicht notwendigerweise zu einer bedeutenden Verschlechterung der Verbindungsergebnisses.

Denkbar ist es in diesem Zusammenhang, dass zumindest bereichsweise die Deckschichten und/oder Abdeckmittel selbst als Schmelzbadsicherung wirken. So kann beispielsweise durch eine entsprechende Formgebung der Randbereiche der miteinander zu verbindenden Elemente erreicht werden, dass diese als Schmelzbadsicherung wirken. Dies kann beispielsweise durch eine teilweise V-förmige oder U-förmige Profilierung des Verbindungsbereichs realisiert werden. Die dadurch entstehende Ausnehmung kann dann beispielsweise durch ein Lotmaterial verfüllt werden. Auch ist es denkbar, dass die Elemente geschichtet ausgebildet sind, derart, dass diese beispielsweise in ihrer dem Kern zugewandten Hälfte durch entsprechende Zusätze einen höheren Schmelzpunkt aufweisen, als in den vom Kern entfernten Bereichen. Ebenso ist es denkbar, dass der Verbindungsvorgang derart gesteuert wird, dass die Deckschichten nur teilweise aufgeschmolzen werden. Dies kann beispielsweise durch eine hohe Schweißgeschwindigkeit mit einem relativ geringen Wärmeeintrag erzielt werden. Als besonders vorteilhaft erweisen sich in diesem Zusammenhang Materialien, die über eine relativ niedrige Wärmeleitfähigkeit und/oder eine hohe Schmelzenthalpie aufweisen.

Als vorteilhaft kann sich jedoch auch erweisen, wenn zumindest bereichsweise zumindest eine zusätzliche Schmelzbadsicherung vorgesehen ist. Dies kann einen besonders effektiven Schutz des Kernmaterials bzw. des Verbindungsbereichs vor einer übermäßigen thermischen Beaufschlagung bewirken. Das Vorsehen einer Mehrzahl von zusätzlichen Schmelzbadsicherungen kann einen nochmals gesteigerten Schutz des Kernmaterials bzw. des Verbindungsbereichs vor einer übermäßigen Erhitzung bewirken. Auch ist es denkbar, dass die Schmelzbadsicherung mehrteilig vorgesehen ist, bzw. dass voneinander unabhängige Schmelzbadsicherungen in den Stirnflächen von miteinander zu verbindenden Verbundwerkstoffen vorgesehen sind, die insbesondere auch gleichartig (bzw. spiegelbildlich) ausgebildet sein können. Natürlich ist auch eine Kombination mit einer Schmelzbadsicherung durch die Elemente selbst möglich.

Insbesondere ist es auch möglich, dass zumindest eine zusätzliche Schmelzbadsicherung zumindest bereichsweise aus thermisch isolierendem Material gebildet sein kann. Dadurch kann ein besonders hoher thermischer Schutz der wärmeempfindlichen Materialien realisiert werden.

Möglich ist es, dass zumindest eine zusätzliche Schmelzbadsicherung zumindest bereichsweise als Hinterlageeinrichtung ausgebildet ist. Diese kann beispielsweise zwischen dem Kernmaterial und dem/den mit einer bzw. mehreren Schweißnähten zu versehenden Element(en) vorgesehen werden.

Von Vorteil ist es, wenn die Abdeckvorrichtung zumindest bereichsweise als profilartiges Abdeckmittel ausgebildet ist. Dies ist beispielsweise dann sinnvoll, wenn ein Verbundwerkstoff an einer oder mehreren seiner Seiten ein tragendes, mechanisch stabiles Bauteil aufweisen soll. Möglich ist es auch, dass eine Verbindung zu einem profilartigen Element, wie beispielsweise einem T-Träger, einem U-förmigen oder einem V-förmigen Profil, einem Hohlprofil usw. vorgesehen wird.

Als sinnvoll hat es sich erwiesen, wenn zur Ausbildung wenigstens einer Schweißnaht und/oder Lötnaht ein Laserschweißverfahren verwendet wird. Insbesondere können dabei CO₂- Laser, Nd-YAG-Laser, Farbstofflaser, Rubinlaser oder Diodenlaser Anwendung finden. Ebenso ist es beliebig, ob die Verbindung durch ein Wärmeleitungsschweißen oder ein Tiefschweißen ausgebildet wird. Die Art der Strahlungsquelle und damit die Art des Laserstrahls kann in Abhängigkeit der zu schweißenden Materialien gewählt werden. Insbesondere bei Aluminium bzw. Aluminiumlegierungen bietet sich aufgrund des Reflektionsverhaltens des Aluminium ein kurzwelliger Laser an, wie beispielsweise ein Nd-YAG-Laser mit einer Wellenlänge von λ = 1,06 Mikrometern. Darüber hinaus hat eine Lichtwellenlänge in diesem Bereich den Vorteil, dass das Licht durch Glasfasern zum Werkstück geführt werden kann, so dass flexiblere Schweißvorgänge möglich sind. Beim Einsatz von durchstimmbaren Lasern (z. B. durchstimmbaren Farbstofflasern) kann die Laserlichtquelle besonders gut an die jeweilige Schweißaufgabe angepasst werden. Dies kann gegebenenfalls auch während des Schweißvorgangs erfolgen.

## Patentansprüche

1. Verbindung wenigstens zweier Elemente (27, 28, 56) aus metallischem Material, insbesondere aus Aluminium oder einer Aluminiumlegierung, wobei zumindest ein erstes Element eine Deckschicht (27, 28) eines Verbundwerkstoffs (12) darstellt, welcher einen insbesondere wärmeempfindlichen Kern (21) und wenigstens eine äußere Deckschicht (27, 28) aufweist,
**dadurch gekennzeichnet,**
**dass** die Verbindung zumindest abschnittsweise als schmelzbadgesicherte (32, 37, 54) Schmelzschweißnaht (30) und/oder schmelzbadgesicherte (32, 37, 54) Lötnaht (30), insbesondere Hartlötnaht, ausgeführt ist, derart, dass während des Verbindungsvorgangs zumindest in einem wesentlichen Zeitraum eine nicht aufgeschmolzene Schicht (32, 37, 54) zwischen aufgeschmolzenem Bereich (30) und Kern (21) verblieben ist.

2. Verbindung nach Anspruch 1, **dadurch gekennzeichnet, dass** das zweite Element (58, 60) ein Profil (58, 60) oder Blech (56) aus einem metallischen Material, insbesondere aus Aluminium oder Aluminiumlegierung, darstellt (Fig. 10, 11, 12).

3. Verbindung nach Anspruch 1 oder 2, **dadurch gekennzeichnet, dass** das zweite Element (58, 60) den Kern (21) des Verbundwerkstoffs (12) zumindest teilweise überdeckt (Fig. 10, 11, 12).

4. Verbindung nach einem der Ansprüche 1 bis 3, **dadurch gekennzeichnet, dass** das zweite Element eine Deckschicht (27, 28) als Teil eines Verbundwerkstoffs (14) darstellt, welcher einen insbesondere wärmezersetzbaren Kern (22) und wenigstens eine äußere Deckschicht (27, 28) aufweist (Fig. 1, 2, 3, 4).

5. Verbindung nach einem der Ansprüche 1 bis 4, **dadurch gekennzeichnet, dass** die beiden Elemente je einen Teil ein und derselben Deckschicht (27) eines Verbundwerkstoffs (12) darstellen (Fig. 5).

6. Verbindung nach einem der Ansprüche 1 bis 5, **dadurch gekennzeichnet, dass** das zweite Element eine zweite Deckschicht (28) ein und desselben Verbundwerkstoffs (12) darstellt (Fig. 7).

7. Verbindung nach einem der Ansprüche 1 bis 6, insbesondere nach Anspruch 6, **dadurch gekennzeichnet, dass** zwischen ersten Element (27) und zweitem Element (28) zumindest bereichsweise ein Überlappungsbereich (66) ausgebildet ist (Fig. 13, 14, 15).

8. Verbindung nach einem der Ansprüche 1 bis 7, **dadurch gekennzeichnet, dass** die Elemente (27, 28) selbst zumindest bereichsweise als Schmelzbadsicherung (32) wirken (Fig. 1, 5, 7, 10).

9. Verbindung nach einem der Ansprüche 1 bis 8, **dadurch gekennzeichnet, dass** zumindest bereichsweise zumindest eine zusätzliche Schmelzbadsicherung (37, 52) vorgesehen ist (Fig. 3, 4, 9).

10. Verbindung nach Anspruch 9, **dadurch gekennzeichnet, dass** zumindest eine zusätzliche Schmelzbadsicherung (37, 52) zumindest bereichsweise aus thermisch isolierenden Material gebildet ist.

11. Verbindung nach einem der Ansprüche 9 oder 10, **dadurch gekennzeichnet, dass** zumindest eine zusätzliche Schmelzbadsicherung (37, 52) zumindest bereichsweise als Hinterlageeinrichtung (39, 54) ausgebildet ist (Fig. 3, 4, 9).

12. Verbindung nach einem der Ansprüche 9 bis 11, **dadurch gekennzeichnet, dass** zumindest eine zusätzliche Schmelzbadsicherung (52) zumindest bereichsweise als Auflageeinrichtung ausgebildet ist (Fig. 9).

13. Verbindung nach einem der Ansprüche 9 bis 12, **dadurch gekennzeichnet, dass** zumindest eine zusätzliche Schmelzbadsicherung (37, 52) zumindest bereichsweise mit wenigstens zwei Verbindungen (30) im Kontakt steht (Fig. 3, 4, 9).

14. Verbindung nach einem der Ansprüche 9 bis 13, **dadurch gekennzeichnet, dass** zumindest eine zusätzliche Schmelzbadsicherung (37, 52) derart ausgebildet ist, dass sie als Positionierungshilfsmittel wirkt.

15. Verbindung nach einem der Ansprüche 9 bis 14, **dadurch gekennzeichnet, dass** zumindest eine zusätzliche Schmelzbadsicherung (37, 52) derart ausgebildet ist, dass sie als zusätzliches Verbindungsmittel wirkt.

16. Verbindung nach einem der Ansprüche 9 bis 15, insbesondere nach Anspruch 14 oder 15, **dadurch gekennzeichnet, dass** die zusätzliche Schmelzbadsicherung (37, 52) als selbstschneidende und/oder selbstjustierende Einrichtung ausgebildet ist.

17. Verbindung nach einem der Ansprüche 1 bis 16, **dadurch gekennzeichnet, dass** zur Ausbildung der Verbindung ein Laserschweißverfahren verwendet wird.

18. Verfahren zum Verbinden wenigstens zweier Elemente aus metallischem Material, insbesondere aus Aluminium oder einer Aluminiumlegierung, wobei zumindest ein erstes Element eine Deckschicht (27, 28) als Teil eines Verbundwerkstoffs (12) darstellt, welcher einen insbesondere wärmeempfindlichen Kern (21) und wenigstens eine äußere Deckschicht (27, 28) aufweist,
**dadurch gekennzeichnet, dass**
die Verbindung zumindest abschnittsweise mittels schmelzbadgesichertem (32) Schmelzschweißen (30) und/oder schmelzbadgesichertem (32) Löten (30), insbesondere Hartlöten durchgeführt wird, derart, dass zwischen aufgeschmolzenem Bereich (30) und Kern (21, 22) zumindest in einem wesentlichen Zeitraum eine nicht aufgeschmolzene Schicht (32, 37, 54) verbleibt.

19. Verfahren nach Anspruch 18, **dadurch gekennzeichnet, dass** die Elemente (27, 28) zumindest abschnittsweise nur teilweise aufgeschmolzen (30) werden (Fig. 1, 5, 7, 10).

20. Verfahren nach Anspruch 18 oder 19, **dadurch gekennzeichnet, dass** zumindest abschnittsweise eine zusätzliche Schmelzbadsicherung (37, 52) verwendet wird (Fig. 3, 4, 9).

21. Verfahren nach einem der Ansprüche 18 bis 20, **dadurch gekennzeichnet, dass** das Verfahren zur Befestigung eines metallischen Elements (56, 58, 60), insbesondere eines plattenartigen (56) und/oder profilartigen (58, 60) metallischen Elements, an einen Verbundwerkstoff (21) verwendet wird (Fig. 10, 11, 12).

22. Verfahren nach einem der Ansprüche 18 bis 21, **dadurch gekennzeichnet, dass** das Verfahren zur Verbindung von zwei Verbundwerkstoffen verwendet wird (Fig. 1, 2, 3, 4) .

23. Verfahren nach einem der Ansprüche 18 bis 22, **dadurch gekennzeichnet, dass** das Verfahren zum Abschluss der Stirnseite (18) eines Verbundwerkstoffs (12) verwendet wird (Fig. 7).

24. Verfahren nach einem der Ansprüche 18 bis 23, **dadurch gekennzeichnet, dass** das Verfahren zur Ausbildung einer Biegung und/oder Kante (47) in einem Verbundwerkstoff (12) verwendet wird (Fig. 5).

25. Verfahren nach einem der Ansprüche 18 bis 24, **dadurch gekennzeichnet, dass** zur Ausbildung der Verbindung ein Laserschweißverfahren verwendet wird.

26. Verwendung einer Verbindung nach einem der Ansprüche 1 bis 17 und/oder eines Verfahrens nach einem der Ansprüche 18 bis 25 zur Ausbildung mehrstückiger Verbundwerkstoffe, insbesondere großformatiger Verbundplatten.
